# EUROPEAN PATENT APPLICATION

(11) **EP 1 312 584 A1**
(43) Date of publication of application: **21.05.2003**
(21) Application number: 02025386.0
(22) Date of filing: 14.11.2002
(51) Int. Cl.: C03B 13/12

(54) **Method and apparatus to amalgamate a compound of vitreous material**

(30) Priority: 20.11.2001 IT UD20010190
(71) Applicant: Bisazza SpA, 33097 Spilimbergo (PN) (IT)
(72) Inventor: Bisazza, Giancarlo, 36100 Vicenza (IT)
(74) Representative: Petraz, Gilberto Luigi

(57) **Abstract**

Apparatus to amalgamate a paste of vitreous material in the molten state with an additive material in the form of granules, scales, slivers or filaments, made of metal, of other types of glass or other material in order to obtain a vitreous compound. The apparatus comprises containing means (11) to contain the paste of vitreous material, mixing means (15) to convey the vitreous compound downwards, in its molten state, towards rolling means (12) to produce manufactured articles. The mixing means (15) comprise at least a first pair of mixing cylinders (19a, 19b) having the respective axes of rotation (20a, 20b) arranged substantially horizontal, parallel to each other and substantially parallel, or slightly inclined, with respect to the direction in which a rolling force is applied by said rolling means (12).

## Description

### FIELD OF THE INVENTION

The present invention concerns a method and the relative apparatus to amalgamate, when still in the molten state, a compound of vitreous material containing inclusions of shiny materials such as copper, gold or other metals, or granules or fragments of other glass.

The compound obtained with the method and apparatus according to the invention is suitable to be used as raw material to make any manufactured product such as quality goods, tesserae for mosaics, costume jewellery, accessories for furnishings or suchlike.

### BACKGROUND OF THE INVENTION

In the state of the art compounds of vitreous material are produced by incorporating, in a cast of molten glass, shiny inclusions in the form of particles, slivers, granules or filaments, initially solid, consisting mainly of metals such as copper, gold or other precious metals, or other types of glass or even other suitable materials.

In the state of the art, the molten glass is cast over a mass of stationary granules; then, the step of manual mixing is started, in one or more successive cycles, which leads to the desired vitreous compound being obtained.

After being molded, the vitreous compound, containing the inclusions determined by the melting of the grains, is normally cast on a device comprising a first pair of calender rollers, which flatten the mass and create a substantially continuous sheet of the desired thickness, and a second pair of molding rollers which perform the required shaping, for example to form mosaic tesserae or other desired shape.

Until now the procedure to obtain this vitreous compound has always involved a mainly manual process, by incorporating and subsequently melting the inclusions in the vitreous paste while it is still in its molten state, at a temperature of about 1000-1200°C. This incorporation can take place in one or more successive charges and in percentages which vary according to the result to be obtained.

The basic vitreous paste normally consists of sand, soda and lime.

To obtain the vitreous compound normally requires one or more steps of kneading and mixing, after the molten vitreous paste has been cast onto the stationary mass of granules to be included, in order to take the inclusions in depth, so that the visual effect in the final product is of inclusions incorporated at various heights inside a shell of transparent vitreous material.

If this procedure is carried out manually, it obviously entails that the efficacy of the final result totally depends on the skill and experience of the workers responsible.

Moreover, it entails very long production times, it is impossible to obtain inline continuity of the process, there are problems in conveying and handling the material, and other disadvantages.

Furthermore, the fact that the granules to be incorporated into the cast of molten glass are static entails that the granulometry of the inclusions is not distributed uniformly, with the result that in some finished tesserae the grains are so thin that they completely melt and can no longer be seen inside the shell of vitreous material.

Another disadvantage deriving from the static nature of the granules to be incorporated is that the grains are not subject to natural stretching when they are included and amalgamated in the cast of molten glass, which leads to a deterioration in the aesthetic effect in the final product.

The state of the art also comprises the following documents: WO-A-99/33754; US-A-5,895,512; DE-B-1.089.521; JP-A-61-174142. In all these known documents, the compound of vitreous material descends due to gravity, when still in the molten state, from a container to the rolling means, normally consisting of rollers. Inclusion means are sometimes provided upstream of the rolling means, to insert solid bodies into the compound of vitreous material. Downstream of the rolling means cutting means such as shears are sometimes provided, which cut the compound of vitreous material into segments of a pre-determined length, before subjecting it to subsequent forming treatments. However, none of said known documents describes means to amalgamate the compound of vitreous material, in a simple and optimum manner, before it is subjected to the subsequent steps of rolling and holing.

The Applicant has perfected the method and apparatus according to the present invention to overcome these shortcomings of the state of the art.

### SUMMARY OF THE INVENTION

The method and apparatus to amalgamate a compound of vitreous material according to the present invention are set out and characterized in the main claims, while the dependent claims describe other innovative characteristics of the present invention.

One purpose of the present invention is to make an apparatus and to perfect a method able to amalgamate together the elements which make up a compound of vitreous material while it is in its molten state.

To be more exact, the purpose of the invention is to mix and amalgamate inclusions of metallic and/or vitreous material, in an initially solid form of granules, fragments or slivers, in a cast of substantially molten vitreous paste.

Another purpose is to allow to automate the procedure to obtain said vitreous compound, reducing the production times and to a large extent eliminating the need for manual intervention, at the same time ensuring that a high quality product is obtained.

A further purpose is to mix the vitreous compound by keeping the granules to be included in movement, thus increasing the uniformity of distribution of the various granulometries and improving the natural stretching of the grains, to the advantage of the final aesthetic and visual effect.

Another purpose is to reduce the quantity of granules needed, given the same final effect, thanks to a better distribution of the various granulometries and the more efficient mixing action.

Another purpose is to obtain a compound comprising a paste of vitreous material and a non-vitreous additive material in the form of granules, fragments, slivers and/or filaments, which is uniformly amalgamated and which will allow to obtain finished products, such as tesserae for mosaics or suchlike, which will be reproducible, even aesthetically, on an industrial scale.

The apparatus according to the present invention comprises containing means to contain the vitreous paste and mixing means to mix the compound of vitreous material while it is being conveyed, when it is still in the molten state, towards means to roll and mold manufactured articles, for example a calender and a mold, or any other conventional type.

The main characteristic of the apparatus according to the invention is that said mixing means comprise at least a first pair of mixing cylinders, having the respective axes of rotation arranged substantially horizontal, parallel to each other and substantially parallel, or slightly inclined, with respect to the direction in which a rolling force is applied by said rolling means.

In the case that the rolling means comprise a calender consisting of at least a pair of rolling rollers, the axes of the first pair of mixing cylinders, with reference to a horizontal plane, are substantially orthogonal, or very inclined, with respect to the axes of rotation of the rolling rollers.

Inclusion means to include additive material, initially solid, in the form of granules, fragments, slivers or filaments into the vitreous paste are arranged between the means to contain the vitreous material and the afore-said first pair of mixing cylinders. In this way the first pair of mixing cylinders not only performs a function of conveying the vitreous compound, but also, primarily, a function of incorporating and first mixing the additive material in the vitreous paste, while the latter is still in its molten state, while the rolling means also perform a function of secondary mixing, in a direction substantially orthogonal to that of the first mixing.

Moreover, the additive material is incorporated into the molten vitreous paste while it is moving and not statically, as in the state of the art, which leads to a better distribution of the granulometry and a more efficient mixing.

According to another embodiment, the mixing means to mix the vitreous compound also comprise a second pair of mixing cylinders, located downstream of the first pair of mixing cylinders, and having the respective axes of rotation arranged horizontally, parallel to each other and, with respect to a horizontal plane, substantially orthogonal, or very inclined, with respect to the axes of rotation of the first pair of mixing cylinders.

According to this embodiment, the axes of rotation of the second pair of mixing cylinders are located substantially parallel, or slightly inclined, with respect to the direction in which a rolling force is applied by said rolling means. This solution allows to make three consecutive mixing operations, with axes alternately orthogonal to each other, thus further increasing the amalgamating function.

Performing two, three or more operations of mixing the vitreous compound, in alternately orthogonal directions, immediately after the inclusions in the form of granules or fragments have been introduced into the molten vitreous paste, ensures that the components are closely amalgamated and that the inclusions are inserted in depth, so as to obtain the desired mixing effect.

The alternately orthogonal mixing operations, together with the movement of the granules during incorporation, also ensure an effective stretching of the grains and a correct distribution of the granules in relation to the granulometry, with the consequent desired aesthetic result of having the inclusions, deriving from the softening and partial melting of the grains, incorporated at various depths in the transparent vitreous shell.

According to a variant, at least in an intermediate position between the mixing means and the rolling means there are heating means, for example a burner or similar, with the function of heating the vitreous compound.

According to another variant, at least part of the mixing cylinders acting on the vitreous compound have their surface profiled or worked in some way, in order to increase the efficiency of mixing.

According to another variant, the mixing cylinders of at least one pair can be driven by independent motors in order to obtain reciprocally different speeds and hence better effects of mixing and stretching the grains.

### BRIEF DESCRIPTION OF THE DRAWINGS

These and other characteristics of the present invention will be apparent from the following description of a preferential form of embodiment of the invention, given as a non-restrictive example with reference to the attached drawings wherein:
- fig. 1 is a lateral section of an apparatus to amalgamate a compound of vitreous material according to the invention;
- fig. 2 is a front view of a variant of fig. 1;
- fig. 3 is a section from A to A of fig. 2.

### DETAILED DESCRIPTION OF SOME PREFERENTIAL EMBODIMENTS

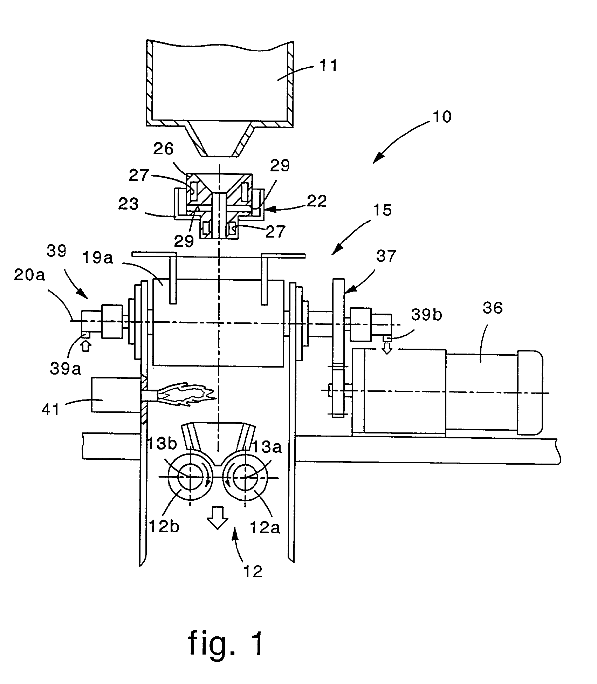

With reference to fig. 1, an apparatus 10 according to the present invention comprises a conventional-type container 11, in which a mass of vitreous material in the molten state is contained, at a temperature of about 1000-1200°C, and rolling means 12, in this case represented by at least a calender consisting of a pair of rolling rollers 12a and 12b.

The axes of rotation 13a and 13b of the rolling rollers 12a and 12b are parallel to each other. Below the calender 12 any other rolling means can be arranged, such as for example one or more molding rollers of a conventional type and therefore not shown in the drawings.

Mixing means 15 are arranged between the container 11 and the calender 12, and comprise a first pair of mixing cylinders 19a and 19b having their respective axes of rotation 20a and 20b parallel to each other and substantially orthogonal to the axes of rotation 13a and 13b of the rolling rollers 12a and 12b.

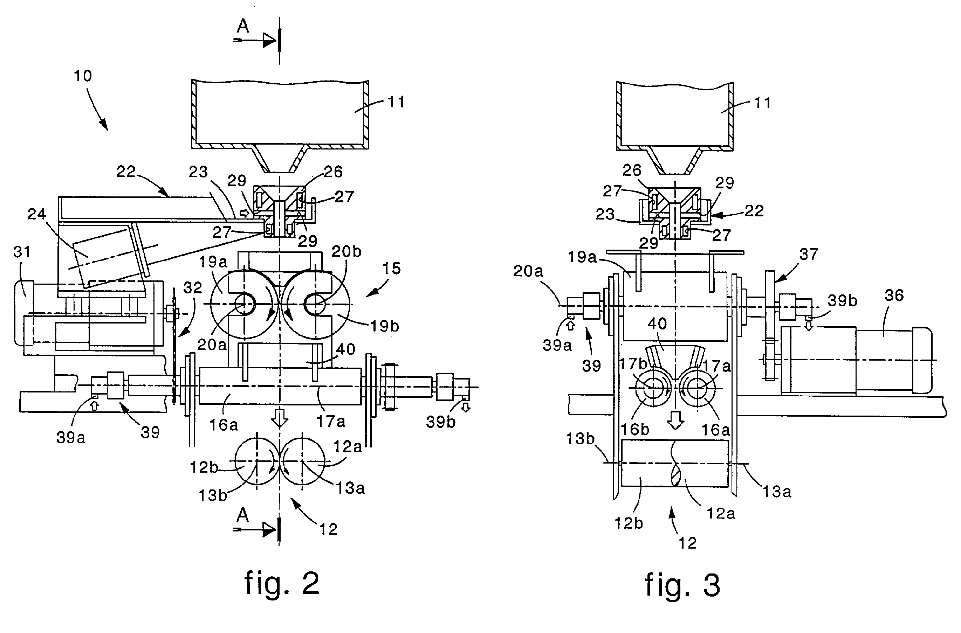

In the variant shown in figs. 2 and 3, apart from the first pair of mixing cylinders 19a and 19b, the mixing means 15 also comprise a second pair of mixing cylinders 16a and 16b, having the respective axes of rotation 17a and 17b parallel to each other and substantially orthogonal to the axes of rotation 20a and 20b of the first pair of mixing cylinders 19a and 19b.

It comes within the field of the invention to provide three or more pairs of mixing cylinders arranged in sequence one after the other and acting in succession on the molten mass of vitreous material.

An inclusion device 22, able to insert initially solid additive material, such as particles, granules or slivers of copper, of other metals or other type of glass or similar material, into the vitreous material descending from the container 11, is arranged immediately below the latter and immediately above the first pair of mixing cylinders 19a and 19b.

The inclusion device 22 comprises an oscillating plate 23 connected to a driving member 24, consisting for example of an electric motor with an eccentric shaft. On a terminal part of the oscillating plate 23 a conveyor funnel 26 is mounted, provided with cooling chambers 27 and four transverse channels or conduits 29, through which the additives can enter the vertical conduit through which the vitreous material flows, and are then dynamically conveyed by the flow of vitreous material.

A first electric motor 36 is able to make the first pair of mixing cylinders 19a and 19b rotate, in the direction of advance of the vitreous compound, by means of a transmission member 37, while a second electric motor 31 is able to make the second pair of mixing cylinders 16a and 16b rotate, if present, also in the direction of advance of the vitreous compound, by means of a transmission member 32.

According to a variant not shown here, there are distinct electric motors for each cylinder of a pair of mixing cylinders, in order to set possibly different speeds of rotation in order to obtain better results of mixing and stretching the grains.

The rotations of the electric motors 31 and 36 can also be coordinated so that the peripheral speeds of the two pairs of mixing cylinders 16a, 16b and 19a, 19b are substantially equal.

Cooling means 39 are associated with each mixing cylinder 16a, 16b and 19a, 19b and comprise inlet conduits 39a to introduce water or other cooling liquid, and corresponding outlet conduits 39b through which the water is discharged.

The mixing means 15 can optionally also comprise a funnel-type element 40 arranged between the first and second pair of mixing cylinders 16a, 16b and 19a, 19b.

The two pairs of mixing cylinders 16a, 16b and 19a, 19b are able to mix the mass composed of vitreous material and additives, amalgamating and homogenizing said mass, while the mass is conveyed towards the calender 12. In fact, the crushing action made on the mass which is still in its molten state by the two pairs of mixing cylinders 19a, 19b first and 16a, 16b later, in directions substantially perpendicular to each other, achieves in the best possible way the amalgamation of the vitreous compound, the incorporation of the metallic inclusions or other types of glass in depth and the melting thereof.

In the case as shown in fig. 1 where there is only one pair of mixing cylinders 19a and 19b between the inclusion device 22 for inserting additives and the calender 12, the crushing and amalgamation of the vitreous compound is achieved sequentially, and in two reciprocally orthogonal directions, by said first pair of mixing cylinders 19a and 19b and by the rollers 12a and 12b of the calender 12 itself.

It is also clear that by increasing the number of pairs of mixing cylinders arranged between the inclusion device 22 for inserting additives and the calender 12, the effect of amalgamating the compound is further increased.

A heating device 41, in this case a burner, is arranged (fig. 1) downstream of the pair of mixing cylinders 19a and 19b and upstream of the calender 12, in order to heat the vitreous compound containing the inclusions before it is sent to the calender 12. The function of the heating device 41 is to compensate and recover possible drops in temperature of the vitreous compound in the segment between the container 11 and the beginning of the calendering and shaping operations, also completing the melting of the initially solid granules.

The method according to the present invention comprises:
- a step of lateral insertion, through the transverse conduits 29, of the additive material in initially solid form of scales or granules into the molten vitreous paste flowing from the container 11;
- a first step of mixing, by means of crushing, the compound of vitreous paste and additive material by means of the first pair of mixing cylinders 19a and 19b arranged between the device 22 to include the additive material and the molding calender 12 arranged downstream and having the axes of rotation 20a, 20b substantially orthogonal, or in any case very inclined, with respect to the axes of rotation 13a, 13b of the calender 12,
- and at least a second mixing step, by means of crushing, performed in a direction orthogonal, or in any case very inclined, with respect to the first mixing step and made either by a second pair of mixing cylinders 16a, 16b, or by the rollers 12a, 12b of the calender 12.

It is clear, however, that modifications or additions of parts can be made to the apparatus 10 as described heretofore, without departing from the field of the invention.

For example, at least part of the mixing cylinders can have their surface profiled or worked in some other way, to improve the mixing effect of the molten glass and the added granules.

It is also clear that, although the invention has been described with reference to a specific example, a skilled person in the art shall certainly be able to achieve many other equivalent forms of embodiment, all of which shall come within the field of this invention.

## Claims

1. Apparatus to amalgamate a paste of vitreous material in the molten state with an additive material in the form of granules, scales, slivers or filaments, made of metal, of other types of glass or other material in order to obtain a vitreous compound, said apparatus comprising containing means (11) to contain said paste of vitreous material, mixing means (15) to mix said vitreous compound while it is conveyed, in its molten state, towards rolling means (12) to roll said vitreous compound for the subsequent production of manufactured articles, **characterized in that** said mixing means (15) comprise at least a first pair of mixing cylinders (19a, 19b) having the respective axes of rotation (20a, 20b) arranged substantially horizontal, parallel to each other and substantially parallel, or slightly inclined, with respect to the direction in which a rolling force is applied by said rolling means (12).

2. Apparatus as in claim 1, wherein said rolling means (12) comprise a pair of rolling rollers (12a, 12b) having their axes of rotation (13a, 13b) substantially horizontal and parallel to each other, **characterized in that** said axes of rotation (20a, 20b) of said first pair of mixing cylinders (19a, 19b) are arranged orthogonal, or very inclined, with respect to the axes of rotation (13a, 13b) of said rolling rollers (12a, 12b).

3. Apparatus as in claim 1 or 2, **characterized in that** said mixing means (15) also comprise a second pair of mixing cylinders (16a, 16b) having the respective axes of rotation (17a, 17b) arranged horizontally, parallel to each other and substantially orthogonal, or very inclined, with respect to the axes of rotation (20a, 20b) of said first pair of mixing cylinders (19a, 19b).

4. Apparatus as in claim 3, **characterized in that** a first electric motor (36) is able to make said first pair of mixing cylinders (19a, 19b) rotate in the direction of advance of said vitreous compound and that a second electric motor (31) is able to make said second pair of mixing cylinders (16a, 16b) rotate also in the direction of advance of said vitreous compound.

5. Apparatus as in claim 3, **characterized in that** a first electric motor is able to make a first cylinder of a pair of mixing cylinders (19a, 19b; 16a, 16b) rotate and a second electric motor is able to make a second cylinder of the same pair of mixing cylinders rotate at a different speed from that of the first cylinder.

6. Apparatus as in claim 3, **characterized in that** said mixing means (15) also comprise a funnel element (40) arranged between said first and said second pair of mixing cylinders (19a, 19b; 16a, 16b).

7. Apparatus as in any claim hereinbefore, **characterized in that** inclusion means (22) are arranged between said containing means (11) and said mixing means (15) in order to insert inside said paste of vitreous material at least an additive material in the form of granules, scales, slivers or filaments.

8. Apparatus as in claim 7, **characterized in that** said inclusion means (22) comprise an oscillating element (23) connected to oscillation means (24) and coupled with a conveyor element (26) provided with a vertical central channel, through which said paste of vitreous material is able to flow, and with a plurality of transverse conduits (29) through which said additive material is able to enter into said central channel in order to mix with said paste of vitreous material.

9. Apparatus as in any claim hereinbefore, **characterized in that** each of said mixing cylinders (16a, 16b; 19a, 19b) is associated with cooling means (39) comprising on one side inlet conducts (39a) to introduce water or other cooling liquid, and on the other side corresponding outlet conducts (39b) for the discharge of said water or other cooling liquid.

10. Apparatus as in any claim hereinbefore, **characterized in that** heating means (41) to heat said vitreous compound are arranged at least upstream of said rolling means (12).

11. Apparatus as in any claim hereinbefore, **characterized in that** at least part of said mixing cylinders (16a, 16b; 19a, 19b) has at least part of the surface profiled or worked in some other way.

12. Method to obtain a vitreous compound starting from a paste of vitreous material in the molten state and comprising a step of inserting an additive material in the form of granules, scales, slivers or filaments into said paste of vitreous material flowing from a containing element (11) towards rolling means (12) to roll said vitreous compound for the subsequent production of manufactured articles, **characterized in that** downstream of said step of inserting said additive material there is at least a first mixing step to mix, by means of crushing, the compound of vitreous material and additive material, in a direction substantially orthogonal, or very inclined, with respect to the direction in which a rolling force is applied by said rolling means (12).

13. Method as in claim 12, **characterized in that** said first mixing step is obtained by means of a first pair of mixing cylinders (19a, 19b) arranged between inclusion means (22) to include said additive material and said rolling means (12).

14. Method as in claim 12, **characterized in that** there is at least a second mixing step of said compound of vitreous material and additive material, obtained by means of a second pair of mixing cylinders (16a, 16b) arranged between said first pair of mixing cylinders (19a, 19b) and said rolling means (12), in order to apply a rolling force on said vitreous compound in a direction substantially orthogonal, or in any case very inclined, with respect to the force imparted by said first pair of mixing cylinders (19a, 19b).

15. Method as in claim 13, **characterized in that** a substantially horizontal element (23) of said inclusion means (22) is made to oscillate by oscillation means (24), said element (23) being coupled with a conveyor element (26) provided with a vertical central channel, through which said paste of vitreous material is made to flow, and with a plurality of transverse conduits (29) through which said additive material enters into said central channel in order to mix with said paste of vitreous material.

16. Method as in any claim from 13 to 15 inclusive, **characterized in that** water or other cooling liquid is made to flow in each of said mixing cylinders (16a, 16b; 19a, 19b) by means of inlet conducts (39a) arranged on one side of each mixing cylinder, and corresponding outlet conducts (39b) arranged on the other side of each mixing cylinder.

17. Vitreous compound obtained with an apparatus according to any one of the claims from 1 to 11 inclusive, or by means of the method according to any one of the claims from 12 to 16 inclusive, and comprising a paste of vitreous material amalgamated with non-vitreous additive material in the form of granules, scales, slivers and/or filaments.
